# FASCICULE DE BREVET EUROPEEN

(11) **EP 3 623 246 B1**
(45) Date de publication et mention de la délivrance du brevet: **27.01.2021**
(21) Numéro de dépôt: 19196981.5
(22) Date de dépôt: 12.09.2019
(51) Int. Cl.: B61D 27/00, B60H 1/00, F24F 13/02

(54) **DISPOSITIF DE DISTRIBUTION D'AIR**
VORRICHTUNG ZUR LUFTVERTEILUNG
AIR DISTRIBUTION DEVICE

(30) Priorité: 14.09.2018 FR 1858316
(43) Date de publication de la demande: 18.03.2020
(73) Titulaire: ALSTOM Transport Technologies, 93400 Saint-Ouen (FR)
(72) Inventeur: DO, Huu-Thi, 17300 ROCHEFORT (FR)
(74) Mandataire: Lavoix

(56) Documents cités:
- EP-A1- 2 921 368

## Description

La présente invention concerne un dispositif de distribution d'air. Ce dispositif est adapté pour être utilisé dans une pluralité d'environnements, notamment dans un véhicule ferroviaire. Généralement, dans un véhicule ferroviaire, par exemple un train régional ou un train grandes lignes, les voitures présentent des intérieurs dont les configurations sont variables. Notamment, dans le cas des voitures de transport de passagers, certaines voitures comportent sept fenêtres sur un côté longitudinal de la voiture, alors que d'autres en comportent cinq. Pour le confort des passagers, ces voitures comprennent une unité de chauffage, ventilation et climatisation émettant un flux d'air vers l'intérieur de la voiture. Pour des raisons d'optimisation de production industrielle, chaque unité de chauffage, ventilation et climatisation est identique d'une voiture à l'autre. Cependant, la répartition du flux d'air dans l'intérieur de la voiture n'est pas spécifiquement adaptée à la configuration de la voiture, ainsi certaines parties de l'intérieur de la voiture reçoivent un volume d'air plus important que d'autres.

Le document EP 2 921 368 A1 décrit un dispositif de climatisation modulaire permettant aisément de modifier la configuration du véhicule ferroviaire, et consistant en deux circuits de circulation et un déflecteur d'air.

L'un des buts de l'invention est de pallier les inconvénients décrits ci-dessus en permettant une meilleure distribution du flux d'air dans une voiture de véhicule ferroviaire quelle que soit sa configuration.

A cet effet, l'invention a pour objet un dispositif de distribution d'air comprenant
- une pluralité de premiers panneaux déflecteurs destinés à être fixés à un support pour délimiter des premiers secteurs de distribution d'air,
- un axe central s'élevant suivant une direction d'élévation,
- une pluralité de deuxièmes panneaux déflecteurs destinés à être fixés à l'axe central, tout autour de l'axe central selon une répartition souhaitée pour délimiter des deuxièmes secteurs angulaires de distribution d'air,
- une pluralité de troisièmes panneaux déflecteurs destinés à être reliés chacun à un premier panneau déflecteur distinct, et
- une pluralité de pièces de liaison, chaque pièce de liaison étant destinée à relier entre eux l'un respectif des deuxièmes panneaux déflecteurs et l'un respectif des troisièmes panneaux déflecteurs, chaque pièce de liaison comprenant un axe de rotation et deux bras mobiles en rotation autour de cet axe de rotation, l'un des bras étant destiné à être relié à l'un respectif des deuxièmes panneaux déflecteurs, et l'autre des bras étant destiné à être relié à l'un respectif des troisièmes panneaux déflecteurs.

Un tel dispositif de distribution d'air est modulaire, si bien qu'il peut aisément être adapté à la configuration d'une voiture ferroviaire de transport de voyageurs et permet ainsi une bonne répartition du flux d'air émis par une unité de chauffage, ventilation et climatisation notamment dans cette voiture afin d'assurer le confort des voyageurs.

Le dispositif de distribution d'air selon l'invention peut comprendre l'une ou plusieurs des caractéristiques suivantes, prises seules ou selon toutes combinaisons techniquement envisageables :
- l'axe central présente une forme de cône droit ou évasé ;
- les deuxièmes panneaux déflecteurs présentent une forme sensiblement rectangulaire dont au moins un des côtés fixés à l'axe central épouse la forme de l'axe central le long de la direction d'élévation ; et
- l'axe central est composé d'une pluralité de tronçons distincts assemblés les uns aux autres.

L'invention concerne également un ensemble comprenant un support et un dispositif de distribution d'air selon l'invention, dans lequel
les premiers panneaux déflecteurs sont fixés au support pour délimiter des premiers secteurs de distribution d'air,
les deuxièmes panneaux déflecteurs sont fixés à l'axe central pour délimiter des deuxièmes secteurs angulaires de distribution d'air,
chaque troisième panneau déflecteur est relié à l'un respectif des premiers panneaux déflecteurs au moyen d'une liaison pivot,
et chaque pièce de liaison est reliée d'une part à l'un des deuxièmes panneaux déflecteurs, et d'autre part à l'un des troisièmes panneaux déflecteurs.

Selon un mode de réalisation particulier, chaque bras des pièces de liaison est mobile en translation le long du panneau déflecteur auquel il est relié.

L'invention concerne également une voiture de véhicule ferroviaire comprenant une caisse délimitant un intérieur et un extérieur de la voiture de véhicule ferroviaire, la voiture comprenant un dispositif de ventilation de l'intérieur de la voiture, le dispositif de ventilation comprenant une unité de chauffage, ventilation et climatisation émettant un flux d'air et une gaine de circulation d'air, la gaine formant un conduit fermé entre une entrée située au niveau du flux d'air émis et une pluralité de sorties, lesdites sorties étant situées au niveau de bouches de sortie d'air orientées vers l'intérieur de la voiture, la voiture de véhicule ferroviaire comprend un dispositif de distribution d'air selon l'invention dans lequel :
- les premiers panneaux déflecteurs sont fixés à l'intérieur de la gaine de façon à délimiter des premiers secteurs angulaires de distribution d'air, chaque secteur comprenant une bouche de sortie d'air,
- l'axe central est disposé sous l'unité de chauffage, ventilation et climatisation sensiblement parallèlement au flux d'air,
- les deuxièmes panneaux déflecteurs sont fixés à l'axe central selon la répartition souhaitée pour délimiter des deuxièmes secteurs angulaires de distribution d'air,
- les troisièmes panneaux déflecteurs sont reliés aux premiers panneaux déflecteurs au moyen d'une liaison pivot, et
- chaque pièce de liaison est reliée d'une part à l'un des deuxièmes panneaux déflecteurs, et d'autre part à l'un des troisièmes panneaux déflecteurs pour que le flux d'air soit dirigé dans des canaux délimités par l'ensemble formé par les premiers, deuxièmes et troisièmes panneaux déflecteurs du dispositif de distribution d'air.

L'invention sera mieux comprise à la lecture de la description qui va suivre, donnée uniquement à titre d'exemple et faite en se référant aux dessins sur lesquels :
- la figure 1 est une vue schématique de dessus d'une moitié longitudinale d'une voiture de véhicule ferroviaire comprenant un dispositif de distribution d'air selon l'invention;
- la figure 2 est une vue schématique de dessus du dispositif de distribution d'air selon l'invention;
- la figure 3 est une vue agrandie du dispositif de distribution d'air de la figure 2; et
- la figure 4 est une vue schématique en perspective de l'axe central et des premiers panneaux déflecteurs du dispositif de distribution d'air selon l'invention.

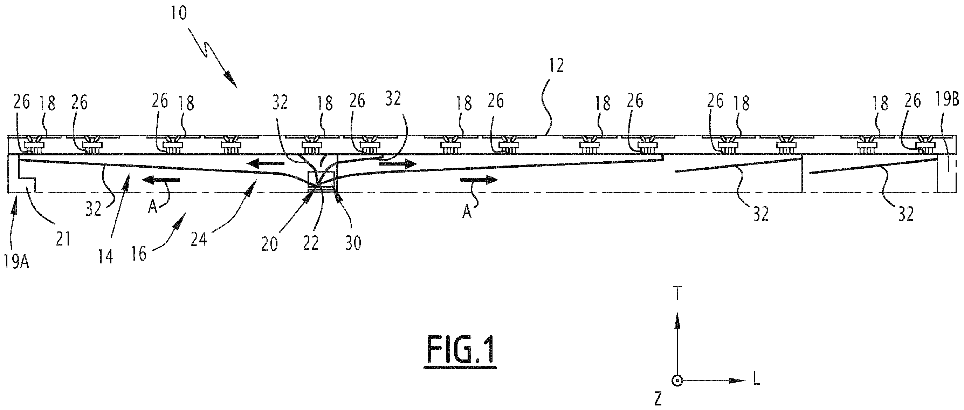

On a représenté, sur la figure 1, une moitié longitudinale d'une voiture de véhicule ferroviaire 10. La voiture 10 comprend une caisse 12 délimitant un intérieur 14 et un extérieur 16 de la voiture de véhicule ferroviaire 10.

La voiture 10 s'étend suivant une direction longitudinale L perpendiculaire à une direction transversale T et s'élève suivant une direction d'élévation Z perpendiculaire à un plan LT défini par les directions longitudinale L et transversale T. Dans ce qui suit, une hauteur est mesurée suivant la direction d'élévation Z et les termes « sur », « sous », « haut » et « bas » sont entendus suivant la direction d'élévation Z lorsque la voiture 10 est en position normale.

Selon le mode de réalisation de la Figure 1, la voiture 10 est une voiture de transport de passagers. En variante, la voiture 10 est une voiture restaurant, une locomotive ou une voiture de transport de marchandises.

La voiture 10 comprend avantageusement une pluralité de baies vitrées 18 ménagées dans la caisse 12 sur au moins un côté longitudinal de la voiture 10. Sur la Figure 1, les baies vitrées 18 sont au nombre de sept.

La voiture 10 comprend avantageusement deux extrémités longitudinales 19A et 19B. Chaque extrémité longitudinale 19A et 19B délimite une plateforme 21, correspondant typiquement à un espace après les portes d'accès au véhicule ferroviaire depuis le quai.

La voiture 10 comprend un dispositif 20 de ventilation de l'intérieur 14 de la voiture 10.

Le dispositif 20 de ventilation de l'intérieur 14 de la voiture 10 comprend une unité de chauffage, ventilation et climatisation 22 et une gaine de circulation d'air 24.

L'unité de chauffage, ventilation et climatisation 22 est configurée pour émettre un flux d'air suivant la direction d'élévation Z et vers le bas dans la gaine de circulation d'air 24. La gaine de circulation d'air 24 forme un conduit fermé entre une entrée située au niveau du flux d'air émis et une pluralité de sorties, lesdites sorties étant situées au niveau de bouches de sortie d'air 26 orientées vers l'intérieur 14 de la voiture 10.

Dans l'exemple de la Figure 1, la gaine de circulation d'air 24 s'étend sur toute la surface de la partie de voiture représentée, et sur une hauteur typiquement comprise entre 50 mm et 150 mm. La hauteur de la gaine 24 peut être différente. Cette hauteur est typiquement déterminée en fonction de la hauteur disponible à l'intérieur de la voiture 10.

Les bouches de sortie d'air 26 sont par exemple disposées longitudinalement sous chaque baie vitrée 18 et transversalement au-dessus de chaque plateforme 21 ou d'un autre espace annexe. Dans l'exemple de la Figure 1, deux bouches de sortie d'air 26 sont disposées sous chaque baie vitrée 18.

Afin de disperser l'air émis par l'unité de chauffage, ventilation et climatisation 22 de manière homogène dans l'ensemble de la voiture 10, cette voiture 10 comprend un dispositif de distribution d'air 30. La gaine de circulation d'air 24 forme un support pour le dispositif de distribution d'air 30.

Le dispositif de distribution d'air 30 comprend une pluralité de premiers panneaux déflecteurs 32, un axe central 34, une pluralité de deuxièmes panneaux déflecteurs 36, une pluralité de troisièmes panneaux déflecteurs 38 et une pluralité de pièces de liaison 40.

Dans le mode de réalisation décrit, les premiers, deuxièmes et troisièmes panneaux déflecteurs 32, 36, 38 présentent des dimensions adaptées aux dimensions intérieures de la gaine de circulation d'air 24.

De préférence, les premiers deuxièmes et troisièmes panneaux déflecteurs 32, 36, 38 sont réalisés dans un matériau rigide. Par exemple, les premiers, deuxièmes et troisièmes panneaux déflecteurs 32, 36, 38 sont réalisés au moins partiellement en métal, ou en plastique ou tout autre matériau adapté.

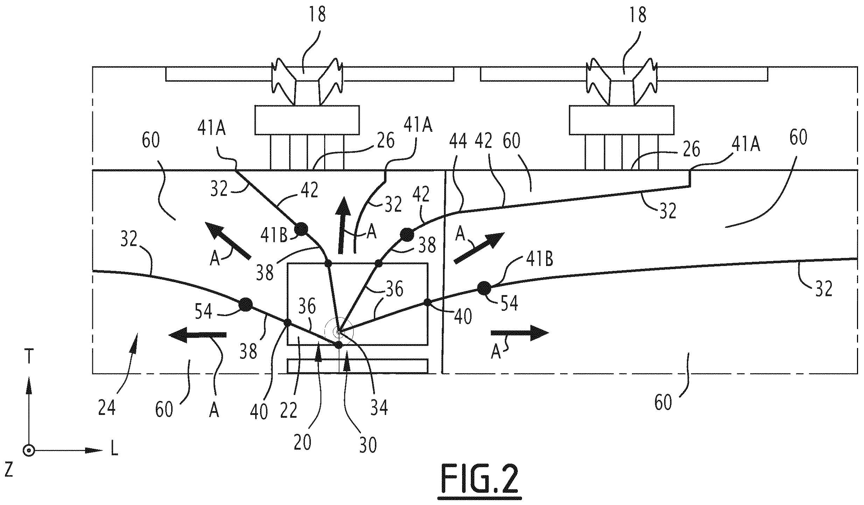

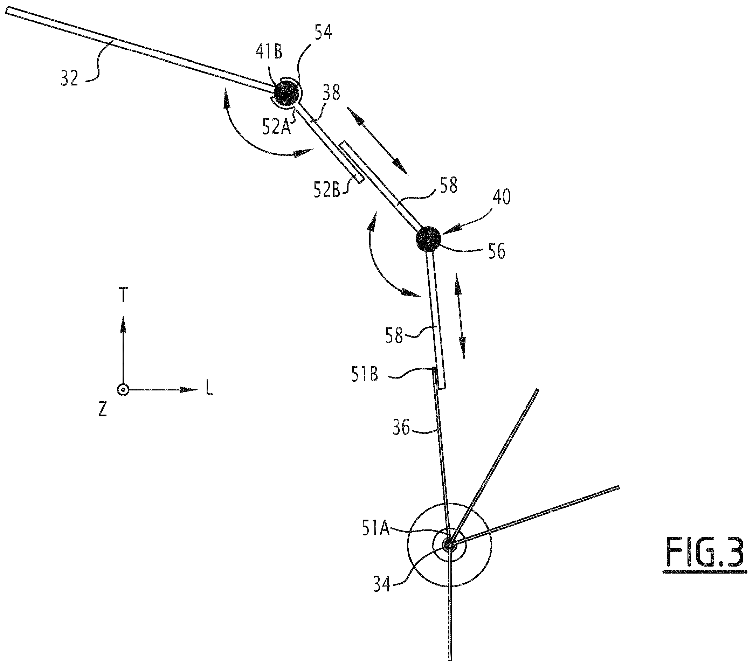

Comme visible sur les Figures 2 et 3, chaque premier panneau déflecteur 32 s'étend dans un plan respectif sensiblement perpendiculaire au plan LT. Chaque premier panneau déflecteur 32 s'étend, depuis une première extrémité longitudinale 41A située au voisinage d'une bouche de sortie d'air 26, en direction de l'unité de chauffage, ventilation et climatisation 22, vers une deuxième extrémité longitudinale 41B. Les premiers panneaux déflecteurs 32 délimitent des premiers secteurs angulaires de distribution d'air.

De préférence, chaque bouche de sortie d'air 26 est comprise dans un premier secteur angulaire de distribution d'air.

Dans l'exemple de la Figure 1, les premiers panneaux déflecteurs 32 sont au nombre de sept, et chaque premier secteur angulaire comprend entre une et quatre bouches de sortie d'air 26.

Chaque premier panneau déflecteur 32 présente par exemple une forme rectangulaire ou d'une pluralité de portions 42 de même hauteur. Chaque portion 42 présente une forme rectangulaire, deux portions 42 voisines étant reliées par un côté 44 sensiblement parallèle à la direction d'élévation Z. Selon cette configuration, chaque portion 42 présente typiquement un angle avec la portion 42 voisine compris entre 10° et 269°. Les premiers panneaux déflecteurs 32 ont typiquement une longueur égale à la somme des longueurs de chaque portion 42 comprise entre 10 mm et 1000 mm. Cette longueur est typiquement fonction du besoin pour se raccorder avec les troisièmes panneaux déflecteurs 38.. Les premiers panneaux déflecteurs 32 ont typiquement une hauteur comprise entre 50 mm et 150 mm, de préférence entre 95 mm et 105 mm.

Les premiers panneaux déflecteurs 32 ont typiquement une épaisseur comprise entre 1 mm et 10 mm. Les premiers panneaux déflecteurs 32 sont fixés à l'intérieur de la gaine de circulation d'air 24. Par exemple, les premiers panneaux déflecteurs 32 sont fixés à la gaine 24 par des moyens de fixations mécaniques, par exemple par rivetage, boulonnage, soudure, collage ou autres moyens de fixation connus de l'homme du métier.

De tels premiers panneaux déflecteurs 32 sont par exemple fixés de façon sensiblement identique dans toutes les voitures d'un véhicule ferroviaire, quel que soit l'aménagement intérieur de chaque voiture et les besoins en aération de chaque bouche de sortie d'air 26.

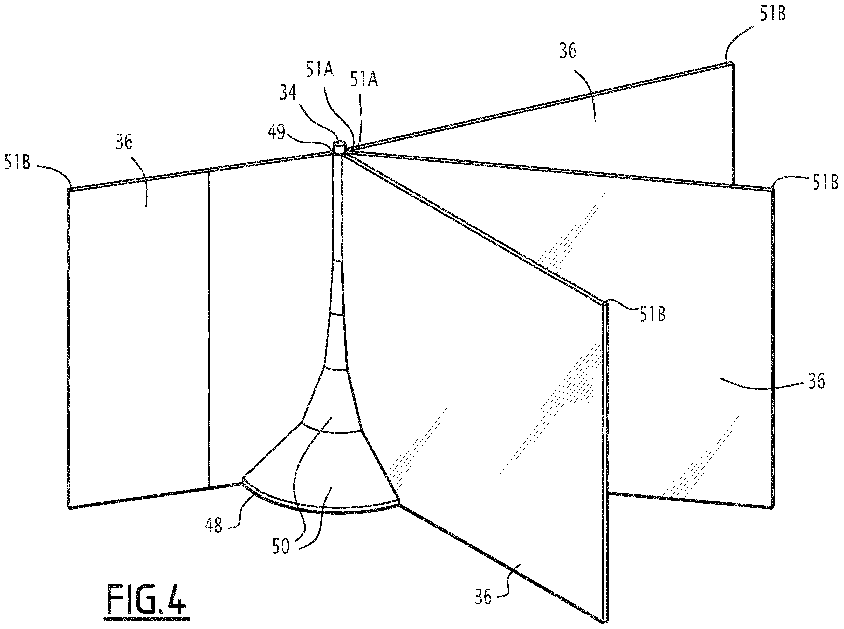

Comme visible sur la Figure 4, l'axe central 34 du dispositif de distribution d'air 30 s'élève suivant la direction d'élévation Z et comprend une pluralité d'organes de fixation des deuxièmes panneaux déflecteurs 36.

De préférence, l'axe central 34 présente une forme de cône droit ou évasé comprenant une base 48 et une pointe 49 opposée à la base 48. Ainsi, un flux d'air dirigé de la pointe vers la base du cône de l'axe central 34 sera dévié dans un plan perpendiculaire à la direction d'élévation Z.

La distribution du flux d'air est ainsi améliorée. Dans cette configuration, la pointe 49 a typiquement un diamètre compris entre 5mm et 10mm de diamètre. La base 48 a typiquement un diamètre compris entre 5 mm et 100mm. L'axe central 34 a typiquement une hauteur comprise entre 50 mm et 150 mm, de préférence entre 95 mm et 105 mm.

En variante, l'axe central présente une forme cylindrique.

De préférence, l'axe central 34 est composé d'une pluralité de tronçons 50 distincts assemblés les uns aux autres. Selon une variante, l'axe central 34 est formé d'une seule pièce.

Les organes de fixation des deuxièmes panneaux déflecteurs 36 sont par exemple des rainures formées dans l'axe central 34 sensiblement parallèles à la direction d'élévation Z, dans lesquelles peuvent s'encastrer les deuxièmes panneaux déflecteurs 36.

De préférence, l'axe central 34 peut être réalisé partiellement en plastique. En variante, l'axe central 34 est réalisé en métal, ou tout autre matériau adapté.

Dans l'exemple de la Figure 1, l'axe central 34 est disposé sous l'unité de chauffage, ventilation et climatisation 22 dans la direction d'élévation Z. L'axe central 34 est placé sur une surface correspondant à une surface de la gaine de circulation d'air 24 perpendiculaire à une surface de l'unité de chauffage, ventilation et climatisation 22 émettant un flux d'air. La position de l'axe 34 est de préférence déterminée en amont afin d'assurer une répartition d'air optimale dans la voiture 10, en fonction des besoins en aération de cette voiture 10.

Sur la Figure 1, les deuxièmes panneaux déflecteurs 36 sont fixés à l'axe central 34, tout autour de l'axe central 34. Chaque deuxième panneau déflecteur 36 s'étend dans un plan respectif sensiblement perpendiculaire au plan LT défini précédemment.

Les deuxièmes panneaux déflecteurs 36 s'étendent entre une première extrémité longitudinale 51A fixée à l'axe central 34 et une deuxième extrémité longitudinale 51B.

Dans l'exemple décrit, les deuxièmes panneaux déflecteurs 36 sont au nombre de quatre répartis autour de l'axe central 34.

Les deuxièmes panneaux déflecteurs 36 sont fixés au niveau des organes de fixation 46. De préférence, le nombre d'organes de fixation est supérieur au nombre de deuxièmes panneaux déflecteurs 36. Ainsi, plusieurs configurations de fixations de deuxièmes panneaux déflecteurs 36 autour de l'axe central 34 sont possibles en fonction de l'aménagement intérieur et des besoins en aération des différentes parties de la voiture de véhicule ferroviaire 10.

De préférence, les deuxièmes panneaux déflecteurs 36 présentent une forme sensiblement rectangulaire dont au moins un des côtés fixés à l'axe central 34 épouse la forme de l'axe central 34 le long de la direction d'élévation Z. Dans l'exemple de la Figure 3, les deuxièmes panneaux déflecteurs 36 présentent tous une forme complémentaire au cône évasé formé par l'axe central 34.

Les deuxièmes panneaux déflecteurs 36 ont typiquement une hauteur sensiblement égale à la hauteur de l'axe central 34. Ces deuxièmes panneaux déflecteurs 36 ont typiquement une surface comprise entre 500 mm² et 150000 mm².

Les deuxièmes panneaux déflecteurs 36 ont typiquement une épaisseur comprise entre 1 mm et 10 mm.

Lorsqu'ils sont fixés à l'axe central 34, les deuxièmes panneaux déflecteurs 36 délimitent des deuxièmes secteurs angulaires de distribution d'air.

Les troisièmes panneaux déflecteurs 38 sont reliés chacun à un premier panneau déflecteur 32 distinct. Selon le mode de réalisation de la Figure 1, certains premiers panneaux déflecteurs 32 ne sont pas reliés à un troisième panneau déflecteur 38.

Chaque troisième panneau déflecteur 38 s'étend dans un plan respectif sensiblement perpendiculaire au plan LT défini précédemment.

Chaque troisième panneau déflecteur 38 s'étend entre une première extrémité longitudinale 52A reliée au premier déflecteur 32 respectif et une deuxième extrémité longitudinale 52B.

Dans l'exemple décrit, les troisièmes panneaux déflecteurs 38 sont au nombre de quatre.

Chaque troisième panneau déflecteur 38 présente par exemple une forme rectangulaire. Les troisièmes panneaux déflecteurs 38 ont typiquement une longueur comprise entre 10 mm et 1000 mm. Les troisièmes panneaux déflecteurs 38 ont typiquement une hauteur comprise entre 50 mm et 150 mm, de préférence entre 95 mm et 105 mm. La hauteur des troisièmes panneaux déflecteurs 38 peut être différente. Cette hauteur est typiquement déterminée en fonction de la hauteur de gaine 24 disponible.

Les troisièmes panneaux déflecteurs 38 ont typiquement une épaisseur comprise entre 1 mm et 10 mm.

Chaque troisième panneau déflecteur 38 est par exemple relié au premier panneau déflecteur 32 respectif au moyen d'une liaison pivot 54. De préférence, la liaison entre le troisième panneau déflecteur 38 et le premier panneau déflecteur 32 est fixe en translation.

Les pièces de liaison 40 (Figure 3) relient entre eux l'un respectif des deuxièmes panneaux déflecteurs 36 et l'un respectif des troisièmes panneaux déflecteurs 38.

Chaque pièce de liaison 40 comprend un axe de rotation 56 et deux bras 58 mobiles en rotation autour de cet axe de rotation 56.

L'axe de rotation 56 s'élève dans la direction d'élévation Z. De préférence, l'axe de rotation 56 peut être légèrement déplacé en translation pour permettre un ajustement optimal de la pièce de liaison 40 par rapport aux panneaux déflecteurs 36, 38 auxquels elle est reliée.

De préférence, les bras 58 sont réalisés dans un matériau rigide. Par exemple, les bras 58 sont réalisés au moins partiellement en métal, ou en plastique ou tout autre matériau adapté.

L'un des bras 58 est relié à l'un respectif des deuxièmes panneaux déflecteurs 36. Ce bras 58 est relié à la deuxième extrémité longitudinale 51B du deuxième panneau déflecteur 36 respectif. L'autre des bras 58 est relié à l'un respectif des troisièmes panneaux déflecteurs 38. Ce bras 58 est relié à la deuxième extrémité longitudinale 52B du troisième panneau déflecteur 38 respectif.

De préférence, chaque bras 58 des pièces de liaison 40 est mobile en translation le long du panneau déflecteur 36, 38 auquel il est relié. Par exemple, chaque bras 58 est relié au panneau déflecteur 36, 38 respectif par une liaison glissière.

L'ensemble de tous les panneaux déflecteurs 32, 36, 38 et des pièces de liaison 40 forme, en coupe selon un plan parallèle au plan LT, un ensemble de segments convergeant vers l'axe central 34 et séparant la gaine de circulation d'air 24 en une pluralité de canaux 60. Les segments formés par les premiers panneaux déflecteurs 32 sont fixes et communs aux différentes voitures, et les segments formés par les deuxièmes panneaux déflecteurs 36, les troisièmes panneaux déflecteurs 38 et les bras 58 des pièces de liaison 40 sont ajustables selon la configuration souhaitée.

En fonctionnement, l'unité de chauffage, ventilation et climatisation 22 émet un flux d'air suivant la direction d'élévation Z vers le bas. Le flux d'air est dirigé suivant l'axe central 34 et est séparé dans les canaux 60 formés par l'ensemble des différents panneaux déflecteurs 32, 36, 38 et les pièces de liaison 40 pour être acheminé vers chaque bouche de sortie d'air 26. Le flux d'air est représenté par les flèches A sur les Figures 1 et 2.

Le dispositif de distribution d'air selon l'invention est simple à fabriquer, est adapté à tout type d'intérieur de voiture de véhicule ferroviaire. Le dispositif distribue efficacement le flux d'air émis par l'unité de chauffage, ventilation et climatisation.

On notera que l'invention n'est pas limitée au mode de réalisation précédemment décrit, mais pourrait présenter diverses variantes complémentaires.

## Revendications

1. Dispositif de distribution d'air (30), le dispositif (30) comprenant une pluralité de premiers panneaux déflecteurs (32) destinés à être fixés à un support pour délimiter des premiers secteurs de distribution d'air, et étant **caractérisé en ce qu'**il comprend également:
- un axe central (34) s'élevant suivant une direction d'élévation (Z),
- une pluralité de deuxièmes panneaux déflecteurs (36) destinés à être fixés à l'axe central (34), tout autour de l'axe central (34) selon une répartition souhaitée pour délimiter des deuxièmes secteurs angulaires de distribution d'air,
- une pluralité de troisièmes panneaux déflecteurs (38) destinés à être reliés chacun à un premier panneau déflecteur (32) distinct, et
- une pluralité de pièces de liaison (40), chaque pièce de liaison (40) étant destinée à relier entre eux l'un respectif des deuxièmes panneaux déflecteurs (36) et l'un respectif des troisièmes panneaux déflecteurs (38), chaque pièce de liaison (40) comprenant un axe de rotation (56) et deux bras (58) mobiles en rotation autour de cet axe de rotation (56), l'un des bras (58) étant destiné à être relié à l'un respectif des deuxièmes panneaux déflecteurs (36), et l'autre des bras (58) étant destiné à être relié à l'un respectif des troisièmes panneaux déflecteurs (38).

2. Dispositif de distribution d'air (30) selon la revendication 1, dans lequel l'axe central (34) présente une forme de cône droit ou évasé.

3. Dispositif de distribution d'air (30) selon la revendication 2, dans lequel les deuxièmes panneaux déflecteurs (36) présentent une forme sensiblement rectangulaire dont au moins un des côtés fixés à l'axe central (34) épouse la forme de l'axe central (34) le long de la direction d'élévation (Z).

4. Dispositif de distribution d'air (30) selon l'une quelconque des revendications 1 à 3, dans lequel l'axe central (34) est composé d'une pluralité de tronçons (50) distincts assemblés les uns aux autres.

5. Ensemble comprenant un support et un dispositif de distribution d'air (30) selon l'une quelconque des revendications 1 à 4, dans lequel
les premiers panneaux déflecteurs (32) sont fixés au support pour délimiter des premiers secteurs de distribution d'air,
les deuxièmes panneaux déflecteurs (36) sont fixés à l'axe central (34) pour délimiter des deuxièmes secteurs angulaires de distribution d'air,
chaque troisième panneau déflecteur (38) est relié à l'un respectif des premiers panneaux déflecteurs (32) au moyen d'une liaison pivot,
et chaque pièce de liaison (40) est reliée d'une part à l'un des deuxièmes panneaux déflecteurs (36), et d'autre part à l'un des troisièmes panneaux déflecteurs (38).

6. Ensemble selon la revendication 5, dans lequel chaque bras (58) des pièces de liaison (40) est mobile en translation le long du panneau déflecteur (36, 38) auquel il est relié.

7. Voiture (10) de véhicule ferroviaire comprenant une caisse (12) délimitant un intérieur (14) et un extérieur (16) de la voiture (10) de véhicule ferroviaire, la voiture (10) comprenant un dispositif (20) de ventilation de l'intérieur (14) de la voiture (10), le dispositif de ventilation (20) comprenant une unité de chauffage, ventilation et climatisation (22) émettant un flux d'air et une gaine de circulation d'air (24), la gaine (24) formant un conduit fermé entre une entrée située au niveau du flux d'air émis et une pluralité de sorties, lesdites sorties étant situées au niveau de bouches de sortie d'air (26) orientées vers l'intérieur (14) de la voiture (10),
**caractérisée en ce que** la voiture (10) de véhicule ferroviaire comprend un dispositif de distribution d'air (30) selon l'une quelconque des revendications 1 à 4, dans lequel :
- les premiers panneaux déflecteurs (32) sont fixés à l'intérieur de la gaine (24) de façon à délimiter des premiers secteurs angulaires de distribution d'air, chaque secteur comprenant une bouche de sortie d'air (26),
- l'axe central (34) est disposé sous l'unité de chauffage, ventilation et climatisation (22) sensiblement parallèlement au flux d'air,
- les deuxièmes panneaux déflecteurs (36) sont fixés à l'axe central (34) selon la répartition souhaitée pour délimiter des deuxièmes secteurs angulaires de distribution d'air,
- les troisièmes panneaux déflecteurs (38) sont reliés aux premiers panneaux déflecteurs (32) au moyen d'une liaison pivot (54), et
- chaque pièce de liaison (40) est reliée d'une part à l'un des deuxièmes panneaux déflecteurs (36), et d'autre part à l'un des troisièmes panneaux déflecteurs (38) pour que le flux d'air soit dirigé dans des canaux (60) délimités par l'ensemble formé par les premiers, deuxièmes et troisièmes panneaux déflecteurs (32, 36, 38) du dispositif de distribution d'air (30).

## Patentansprüche

1. Luftverteilungsvorrichtung (30), wobei die Vorrichtung (30) eine Mehrzahl von ersten Ablenkplatten (32) aufweist, die vorgesehen sind, um an einem Träger befestigt zu sein, um erste Luftverteilungsbereiche zu begrenzen, und **dadurch gekennzeichnet, dass** sie ferner aufweist:
- eine zentrale Achse (34), die sich entlang einer Höhenrichtung (Z) erhebt,
- eine Mehrzahl von zweiten Ablenkplatten (36), die vorgesehen sind, um an der zentralen Achse (34) um die gesamte zentrale Achse (34) herum gemäß einer gewünschten Verteilung befestigt zu sein, um zweite Luftverteilungswinkelbereiche zu begrenzen,
- eine Mehrzahl von dritten Ablenkplatten (38), die vorgesehen sind, um jeweils mit einer unterschiedlichen ersten Ablenkplatte (32) verbunden zu sein, und
- eine Mehrzahl von Verbindungsstücken (40), wobei jedes Verbindungsstück (40) vorgesehen ist, um eine jeweilige der zweiten Ablenkplatten (36) und eine jeweilige der dritten Ablenkplatten (38) miteinander zu verbinden, wobei jedes Verbindungsstück (40) eine Drehachse (56) und zwei Arme (58) aufweist, die um diese Drehachse (56) drehbewegbar sind, wobei einer der Arme (58) vorgesehen ist, um mit einer jeweiligen der zweiten Ablenkplatten (36) verbunden zu sein, und der andere der Arme (58) vorgesehen ist, um mit einer jeweiligen der dritten Ablenkplatten (38) verbunden zu sein.

2. Luftverteilungsvorrichtung (30) gemäß Anspruch 1, wobei die zentrale Achse (34) eine Form eines geraden oder erweiterten Kegels hat.

3. Luftverteilungsvorrichtung (30) gemäß Anspruch 2, wobei die zweiten Ablenkplatten (36) eine im Wesentlichen rechteckige Form haben, von der mindestens eine der an der zentralen Achse (34) befestigten Seiten an die Form der zentralen Achse (34) entlang der Höhenrichtung (Z) angepasst ist.

4. Luftverteilungsvorrichtung (30) gemäß irgendeinem der Ansprüche 1 bis 3, wobei die zentrale Achse (34) aus einer Mehrzahl von unterschiedlichen Teilabschnitten (50) zusammengesetzt ist, die zusammengebaut sind.

5. Baugruppe, aufweisend einen Träger und eine Luftverteilungsvorrichtung (30) gemäß irgendeinem der Ansprüche 1 bis 4, wobei
die ersten Ablenkplatten (32) an dem Träger befestigt sind, um erste Luftverteilungsbereiche zu begrenzen,
die zweiten Ablenkplatten (36) an der zentralen Achse (34) befestigt sind, um zweite Luftverteilungswinkelbereiche zu begrenzen,
jede dritte Ablenkplatte (38) mittels einer Schwenkverbindung mit einer jeweiligen der ersten Ablenkplatten (32) verbunden ist,
und jedes Verbindungsstück (40) einerseits mit einer der zweiten Ablenkplatten (36) und andererseits mit einer der dritten Ablenkplatten (38) verbunden ist.

6. Baugruppe gemäß Anspruch 5, wobei jeder Arm (58) der Verbindungsstücke (40) entlang der Ablenkplatte (36, 38), mit der er verbunden ist, translationsbewegbar ist.

7. Schienenfahrzeugwagen (10), aufweisend eine Karosserie (12), die einen Innenraum (14) und ein Äußeres (16) des Schienenfahrzeugwagens (10) begrenzt, wobei der Wagen (10) eine Vorrichtung (20) zum Belüften des Innenraums (14) des Wagens (10) aufweist, wobei die Belüftungsvorrichtung (20) aufweist eine Einheit zum Heizen, Belüften und Klimatisieren (22), die einen Luftstrom ausgibt, und einen Luftzirkulationskanal (24), wobei der Kanal (24) eine geschlossene Leitung zwischen einem Eingang, der sich bei dem ausgegebenen Luftstrom befindet, und einer Mehrzahl von Ausgängen ausbildet, wobei die Ausgänge an Luftauslassöffnungen (26) angeordnet sind, die in Richtung zum Innenraum (14) des Wagens (10) ausgerichtet sind,
**dadurch gekennzeichnet, dass** der Schienenfahrzeugwagen (10) eine Luftverteilungsvorrichtung (30) gemäß irgendeinem der Ansprüche 1 bis 4 aufweist, wobei:
- die ersten Ablenkplatten (32) im Inneren des Kanals (24) befestigt sind, um erste Luftverteilungswinkelbereiche zu begrenzen, wobei jeder Bereich eine Luftauslassöffnung (26) aufweist,
- die zentrale Achse (34) unter der Einheit zum Heizen, Belüften und Klimatisieren (22) im Wesentlichen parallel zum Luftstrom angeordnet ist,
- die zweiten Ablenkplatten (36) an der zentralen Achse (34) gemäß der gewünschten Verteilung befestigt sind, um zweite Luftverteilungswinkelbereiche zu begrenzen,
- die dritten Ablenkplatten (38) mittels einer Schwenkverbindung (54) mit den ersten Ablenkplatten (32) verbunden sind, und
- jedes Verbindungsstück (40) einerseits mit einer der zweiten Ablenkplatten (36) und andererseits mit einer der dritten Ablenkplatten (38) verbunden ist, so dass der Luftstrom in Kanäle (60) gelenkt wird, die durch die Baugruppe begrenzt sind, die durch die ersten, die zweiten und die dritten Ablenkplatten (32, 36, 38) der Luftverteilungsvorrichtung (30) ausgebildet ist.

## Claims

1. Air distribution device (30), the device (30) comprising a plurality of first deflector panels (32) which are to be fixed to a support in order to delimit first air distribution sectors, and being **characterised in that** it also comprises:
- a central shaft (34) extending in an elevation direction (Z),
- a plurality of second deflector panels (36) which are to be fixed to the central shaft (34) all round the central shaft (34) in accordance with a desired distribution in order to delimit second angular air distribution sectors,
- a plurality of third deflector panels (38) which are each to be connected to a separate first deflector panel (32), and
- a plurality of connecting members (40), each connecting member (40) being intended to connect together one of the second deflector panels (36) and one of the third deflector panels (38), each connecting member (40) having an axis of rotation (56) and two arms (58) which are rotatable about the axis of rotation (56), one of the arms (58) being intended to be connected to one of the second deflector panels (36) and the other of the arms (58) being intended to be connected to one of the third deflector panels (38).

2. Air distribution device (30) according to claim 1, wherein the central shaft (34) has the shape of a straight or flared cone.

3. Air distribution device (30) according to claim 2, wherein the second deflector panels (36) have a substantially rectangular shape, of which at least one of the sides fixed to the central shaft (34) conforms to the shape of the central shaft (34) in the elevation direction (Z).

4. Air distribution device (30) according to any one of claims 1 to 3, wherein the central shaft (34) is composed of a plurality of separate sections (50) which are assembled with one another.

5. Assembly comprising a support and an air distribution device (30) according to any one of claims 1 to 4, wherein
the first deflector panels (32) are fixed to the support in order to delimit first air distribution sectors,
the second deflector panels (36) are fixed to the central shaft (34) in order to delimit second angular air distribution sectors,
each third deflector panel (38) is connected to one of the first deflector panels (32) by means of a pivot connection,
and each connecting member (40) is connected on the one hand to one of the second deflector panels (36) and on the other hand to one of the third deflector panels (38).

6. Assembly according to claim 5, wherein each arm (58) of the connecting members (40) is movable in translation along the deflector panel (36, 38) to which it is connected.

7. Railway vehicle carriage (10) comprising a body (12) which delimits an interior (14) and an exterior (16) of the railway vehicle carriage (10), the carriage (10) comprising a device (20) for ventilating the interior (14) of the carriage (10), the ventilation device (20) comprising a heating, ventilation and air conditioning unit (22) which emits an air stream, and an air circulation duct (24), the duct (24) forming a closed conduit between an inlet situated in the region of the emitted air stream and a plurality of outlets, said outlets being situated in the region of air outlet nozzles (26) which are oriented towards the interior (14) of the carriage (10),
**characterised in that** the railway vehicle carriage (10) comprises an air distribution device (30) according to any one of claims 1 to 4, wherein:
- the first deflector panels (32) are fixed inside the duct (24) so as to delimit first angular air distribution sectors, each sector having an air outlet nozzle (26),
- the central shaft (34) is arranged beneath the heating, ventilation and air conditioning unit (22) substantially parallel to the air stream,
- the second deflector panels (36) are fixed to the central shaft (34) in accordance with the desired distribution in order to delimit second angular air distribution sectors,
- the third deflector panels (38) are connected to the first deflector panels (32) by means of a pivot connection (54), and
- each connecting member (40) is connected on the one hand to one of the second deflector panels (36) and on the other hand to one of the third deflector panels (38) so that the air stream is directed into channels (60) delimited by the assembly formed by the first, second and third deflector panels (32, 36, 38) of the air distribution device (30).
